# EUROPEAN PATENT SPECIFICATION

(11) **EP 3 498 587 B1**
(45) Date of publication and mention of the grant of the patent: **11.05.2022**
(21) Application number: 17207327.2
(22) Date of filing: 14.12.2017
(51) Int. Cl.: B63B 32/57

(54) **FOAM PRODUCT**
SCHAUMPRODUKT
PRODUIT EN MOUSSE

(43) Date of publication of application: 19.06.2019
(60) Divisional application: 20150312.5
(73) Proprietor: Agit Global IP Holding, LLC, Irvine, CA 92606 (US)
(72) Inventor: YEH, Tzong In, Irvine, CA California 92606 (US)
(74) Representative: Viering, Jentschura & Partner mbB Patent- und Rechtsanwälte

(56) References cited:
- WO-A1-2017/066824
- CA-A1- 2 728 558
- CN-A- 102 923 270
- US-A1- 2008 146 101

## Description

### BACKGROUND OF THE INVENTION

### 1. Field of the Invention

The present invention relates to a foam product, and more particularly to a closed-cell foam product.

### 2. Description of the Related Art

Nowadays, if a foam product is too wide to be carried under the arm, such as a standup paddle board, it may employ a recessed grip handle structure so that a user may have the fingers of a hand be inserted into the grip handle structure to carry the paddle board under the arm.

One type of standup paddle board is illustrated in U.S. Pat. No. 9,120,218. In this paddle board, the grip handle structure is constructed from a rigid plastic material, such as Nylon.RTM. fiber and installed flush into the deck of the paddle board at the center of gravity of the board to provide the proper balance when the board is carried using the grip handle. More specifically, the grip handle structure is glued to the foam core of the paddle board using an epoxy resin glue.

Another type of standup paddle board is illustrated in U.S. Patent Pub. No. 2014/0315453. In this paddle board, a recess is defined in a top surface of the foam core of the paddle board, and an upper foam skin covers the top surface of the foam core. In particular, a portion of the upper foam skin extends along the profile of the recess in the foam core to form a grip handle structure for carrying the paddle board.

The existing foam product, which is illustrated in U.S. Patent Pub. No. 2008146101 A1, CN. Patent Pub. No.102923270 A, WO. Patent Pub. No. 2017066824 A1, CA Patent Pub. No. 2728558 A1 and US Patent Pub. No. 2013/0130578 A1 comprises a foam core and a foam skin having a bottom surface bonded to a upper surface of the foam core, wherein the boundary between the foam core and the foam skin is completely flat.

### SUMMARY OF THE INVENTION

According to the present invention, a foam product as defined by claim 1 is provided. The dependent claim show some examples thereof.

This invention provides a new foam product with a different structure as compared to the convention foam product.

Specifically, the foam product generally includes a foam core, a foam skin, and a base structure. The foam core is disposed on the base structure and is essentially made of expanded beads. Moreover, the foam core has an outer surface on which some outermost beads of the expanded beads are exposed and bulging outward with different heights to form a bubbly texture. The foam skin has an inner surface attached to the outer surface of the foam core, and has at its inner surface a plurality of concave cavities each matedly surrounding a respective one of the bulging, outermost beads on the outer surface of the foam core.

In one embodiment, the foam product is directed to a bicycle saddle in which the foam core serves as a padding, the foam skin serves as an overlying covering, and the base structure includes a saddle shell attached to the foam core and a support rail mounted underneath the saddle shell.

In another embodiment, the foam product is directed to one of a stand up paddle board, sit on top kayak, small sail boat, windsurf board, a snow board, and a skiing board. The foam skin is placed on top of the foam core. The base structure includes a second, foam skin bonded to a bottom surface of the foam core, and a non-foam plastic plate bonded to a bottom surface of the second foam skin.

The foregoing and other objectives, features, and advantages of the invention will be more readily understood upon consideration of the following detailed description of the invention, taken in conjunction with the accompanying drawings.

### BRIEF DESCRIPTION OF THE DRAWINGS

FIG. 1 is a perspective view of a foam product, in accordance with a first example, wherein Fig. 1 as such does not show all features of claim 1;
FIG. 2 illustrates that the foam product shown in FIG. 1 is carried by a user, wherein Fig. 2 as such does not show all features of claim 1;
FIG. 3 is a partial cross-sectional view of the foam product shown in FIG. 1, showing that fingers of a hand are inserted into a recessed grip handle structure of the foam product, wherein Fig. 3 as such does not show all features of claim 1;
FIG. 3A is an enlarged view of the foam product shown in FIG. 3, wherein Fig. 3A as such does not show all features of claim 1;
FIG. 4 is a cross-sectional view of the foam product shown in FIG. 1 taken along the line IV-IV, wherein Fig. 4 as such does not show all features of claim 1;
FIG. 5 is a perspective view of a foam core and a soft shell of the foam product shown in FIG. 1, wherein Fig. 5 as such does not show all features of claim 1;
FIG. 6 is an enlarged view of the foam product shown in FIG. 5, wherein

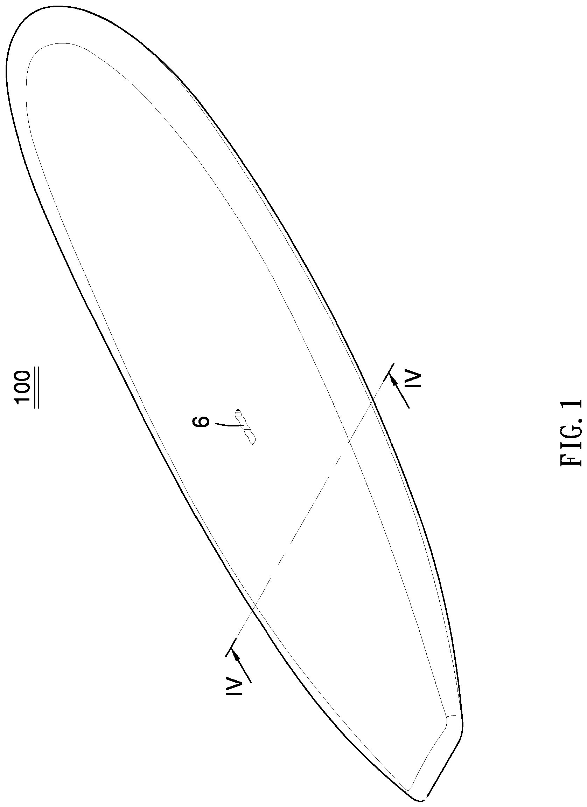

Fig. 1 as such does not show all features of claim 1;

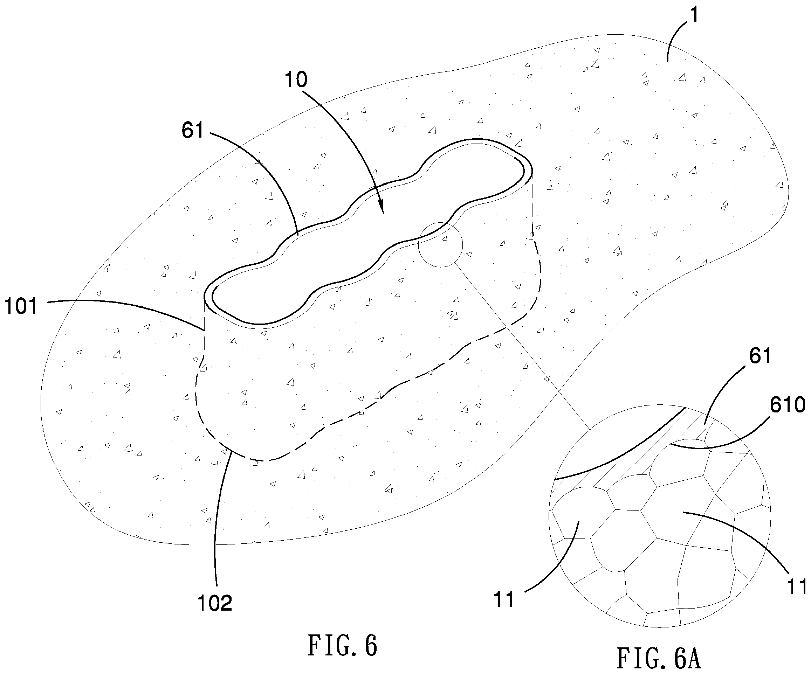

FIG. 6A is an enlarged view of the foam product shown in FIG. 6, wherein Fig. 6A as such does not show all features of claim 1;

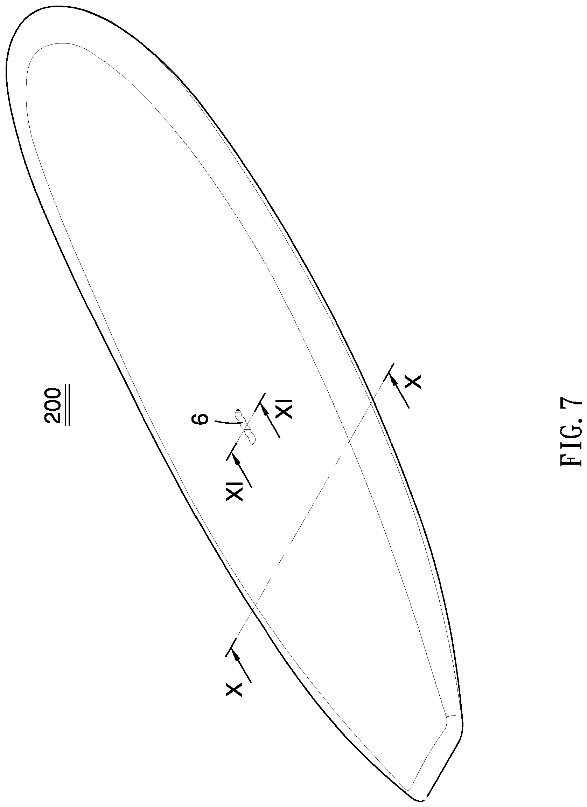

FIG. 7 is a perspective view of a foam product in accordance with a second example, wherein Fig. 7 as such does not show all features of claim 1;

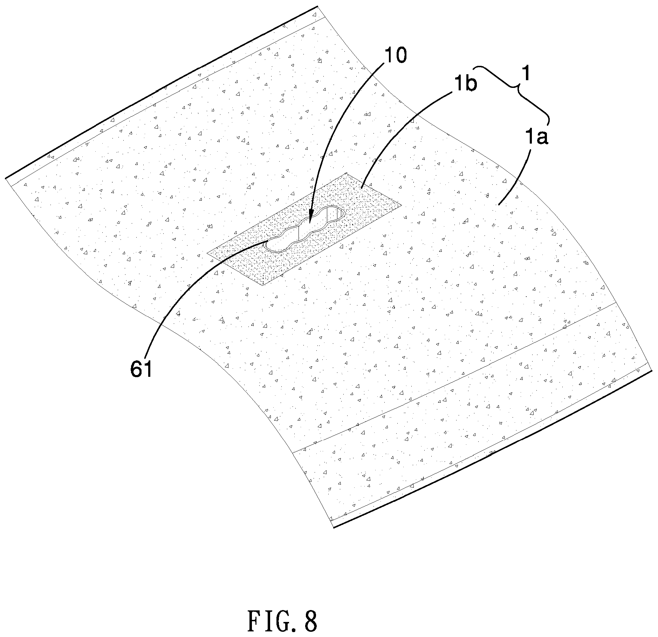

FIG. 8 is a perspective view of a foam core and a soft shell of the foam product shown in FIG. 7, wherein Fig. 1 as such does not show all features of claim 1;

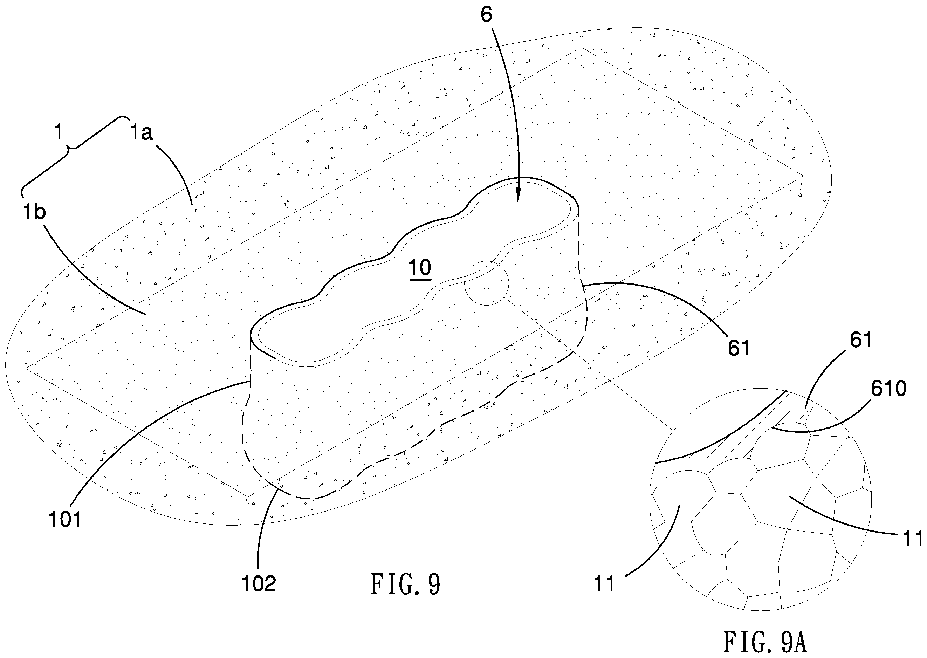

FIG. 9 is an enlarged view of the foam product shown in FIG. 8, wherein Fig. 9 as such does not show all features of claim 1; FIG. 9A is an enlarged view of the foam product shown in FIG. 9, wherein Fig. 9A as such does not show all features of claim 1;

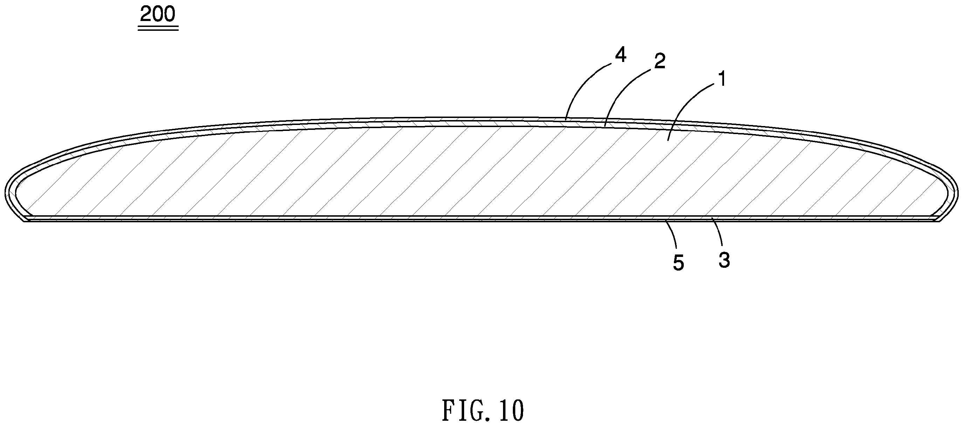

FIG. 10 is a cross-sectional view of the foam product shown in FIG. 7 taken along the line X-X, wherein Fig. 10 as such does not show all features of claim 1;

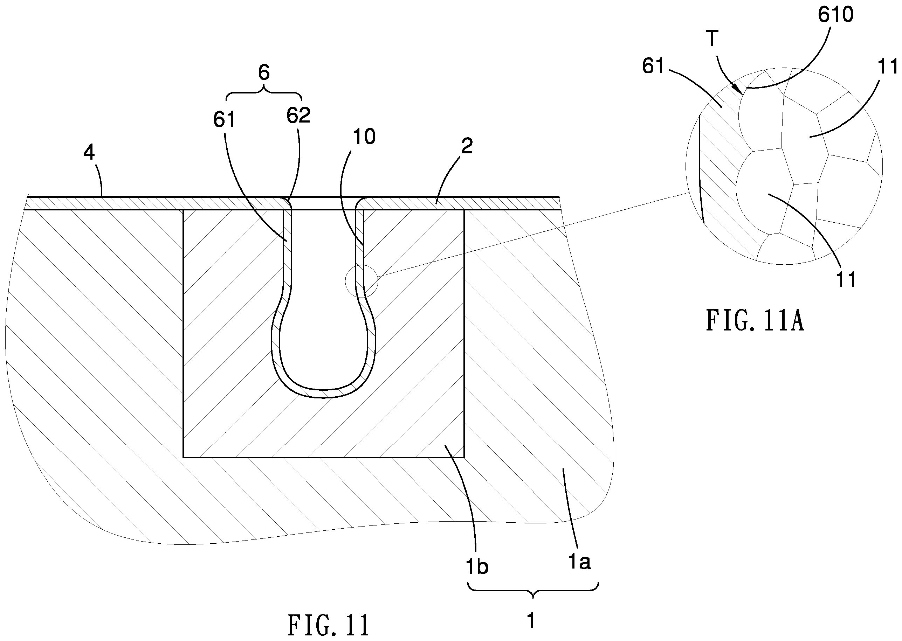

FIG. 11 is a cross-sectional view of the foam product shown in FIG. 7 taken along the line XI-XI, wherein Fig. 11 as such does not show all features of claim 1;
FIG. 11A is an enlarged view of the foam product shown in FIG. 11, wherein Fig. 11A as such does not show all features of claim 1;

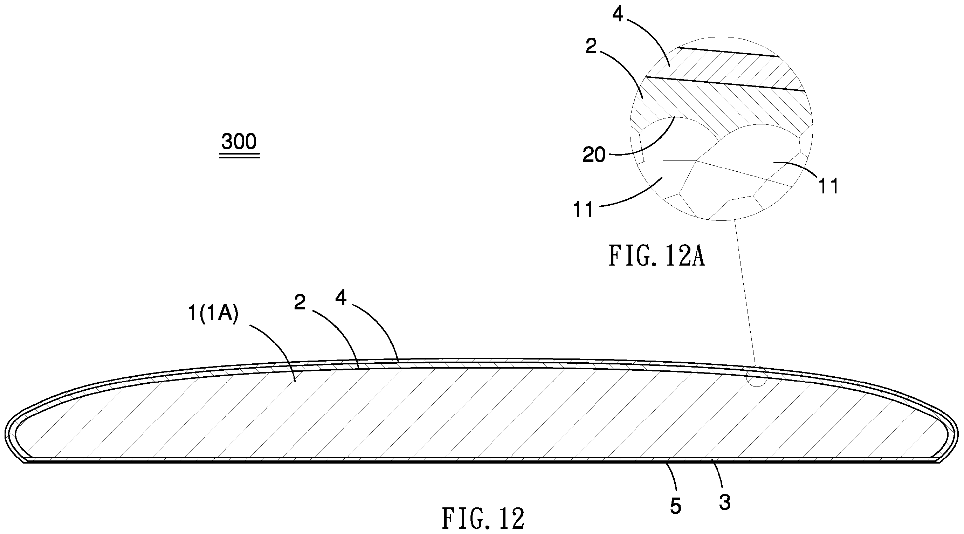

FIG. 12 is a cross-sectional view of a foam product in accordance with a third example of the present invention, wherein Fig. 12 as such does not show all features of claim 1;
FIG. 12A is an enlarged view of the foam product shown in FIG. 12, wherein Fig. 12A as such does not show all features of claim 1;

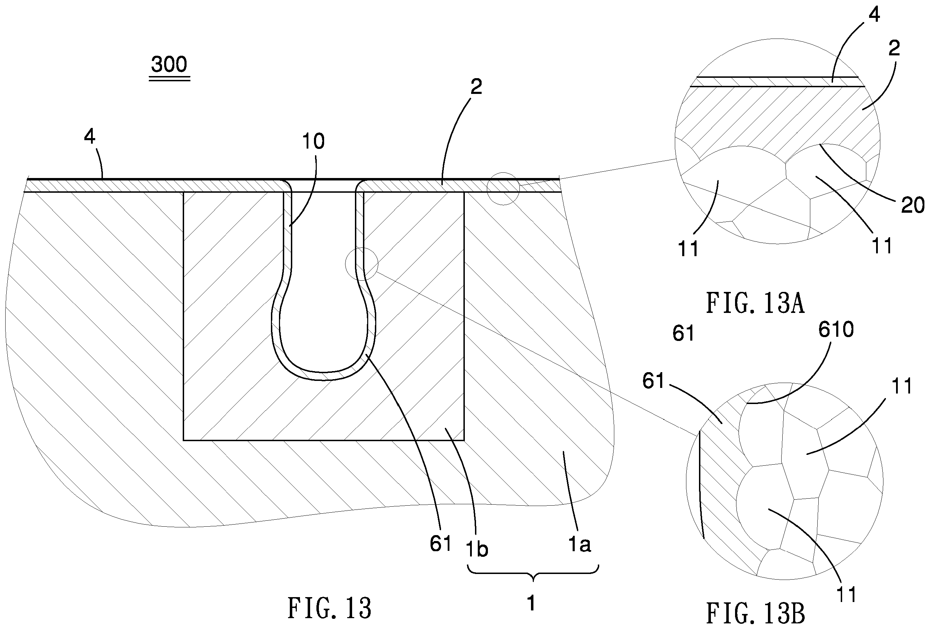

FIG. 13 is another cross-sectional view of the foam product shown in FIG. 12, wherein Fig. 13 as such does not show all features of claim 1;
FIG. 13A is an enlarged view of the foam product shown in FIG. 13;
FIG. 13B is another enlarged view of the foam product shown in FIG.13;

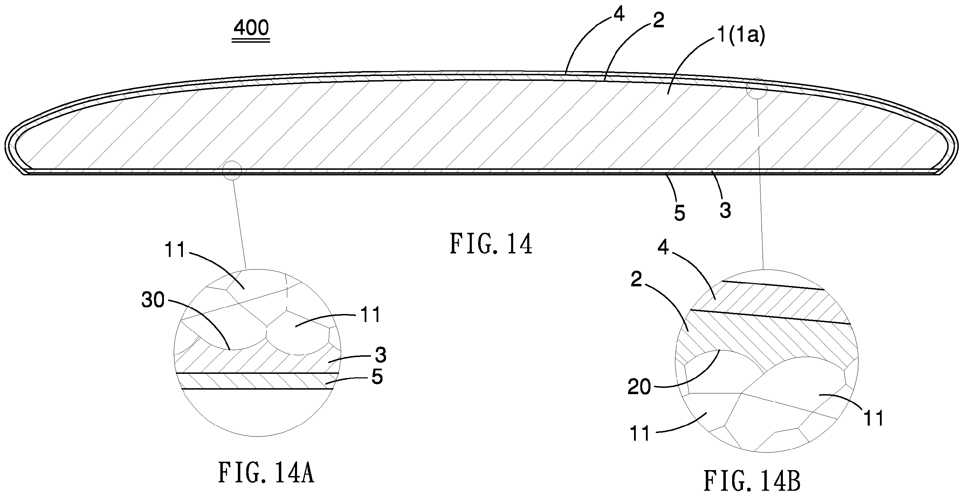

FIG. 14 is a cross-sectional view of a foam product in accordance with a fourth example, wherein Fig. 14 does not show all features of claim 1;
FIG. 14A is an enlarged view of the foam product shown in FIG. 14, wherein Fig. 14A as such does not show all features of claim 1; FIG. 14B is another enlarged view of the foam product shown in FIG. 14;

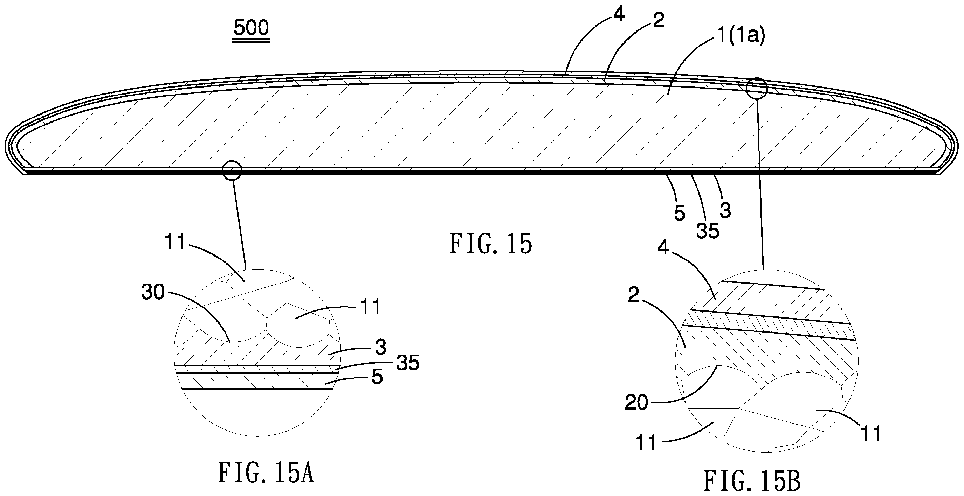

FIG. 15 is a cross-sectional view of a foam product in accordance with a fifth example, wherein Fig. 15 as such does not show all features of claim 1;
FIG. 15A is an enlarged view of the foam product shown in FIG. 15, wherein Fig. 15A as such does not show all features of claim 1; FIG. 15B is another enlarged view of the foam product shown in FIG. 15, wherein Fig. 15B as such does not show all features of claim 1;

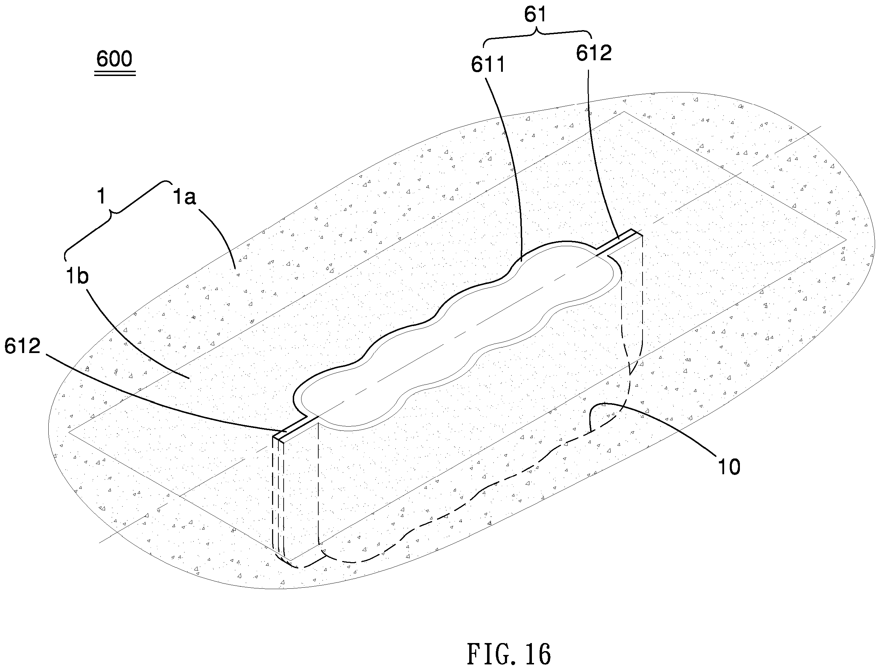

FIG. 16 is a perspective view of a foam core and a soft shell of a foam product in accordance with a sixth example, wherein Fig. 16 as such does not show all features of claim 1;

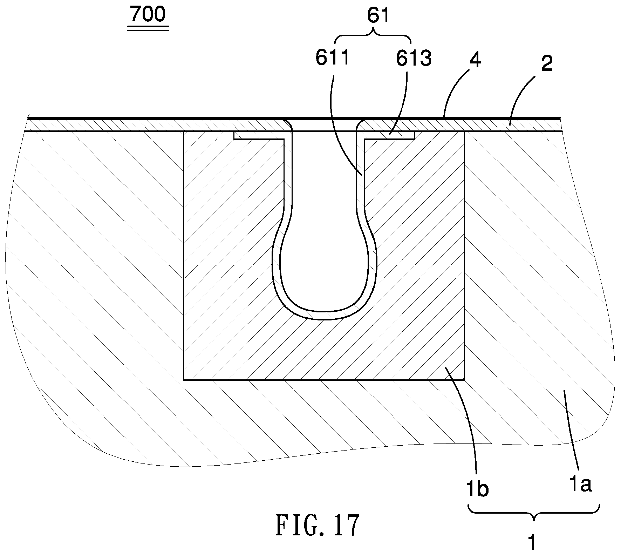

FIG. 17 is a partial cross-sectional view of a foam product in accordance with a seventh examples, wherein Fig. 17 as such does not show all features of claim 1;

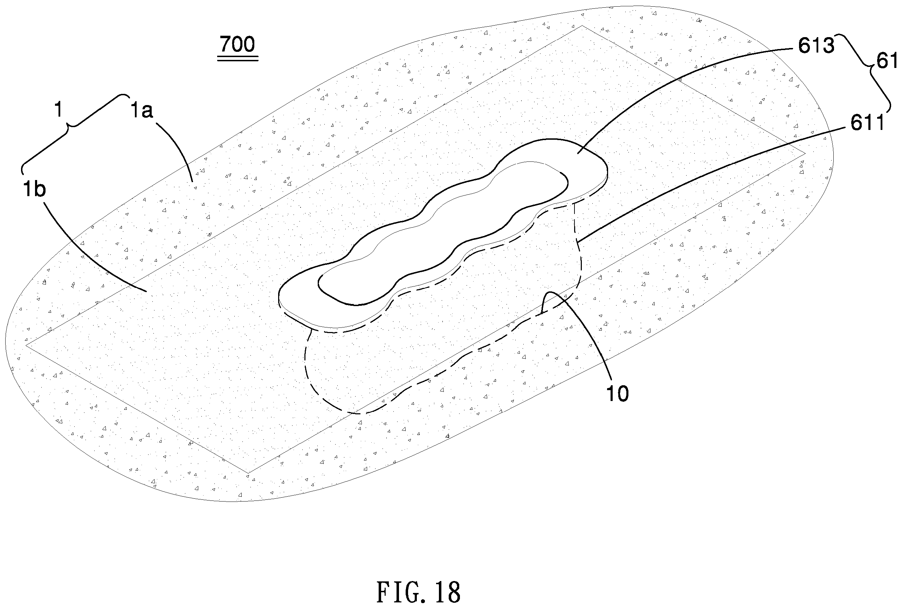

FIG. 18 is a perspective view of a foam core and a soft shell of the foam product shown in FIG. 17, wherein Fig. 17 as such does not show all features of claim 1.

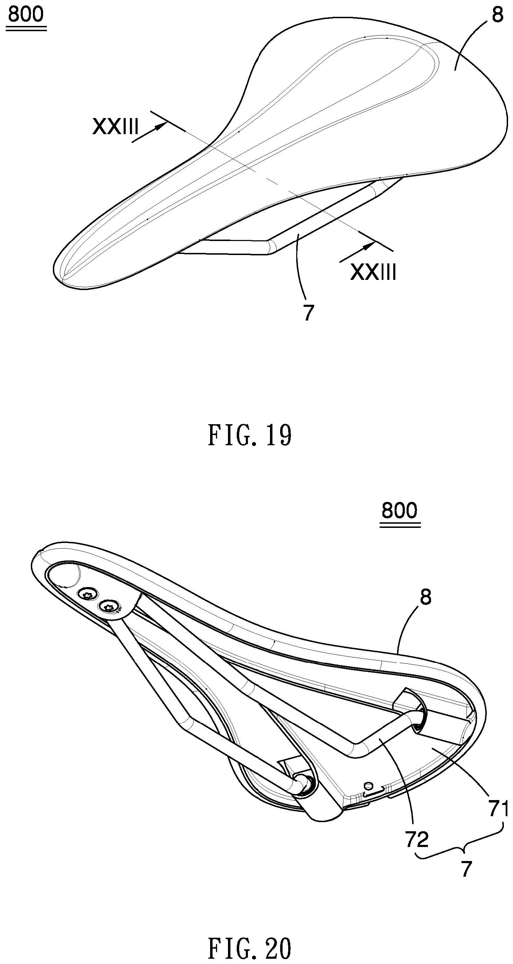

FIG. 19 is a top perspective view of a foam product in accordance with an eighth examples, wherein Fig. 19 is not covered by claim 1;
FIG. 20 is a bottom perspective view of the foam product shown in FIG. 19;

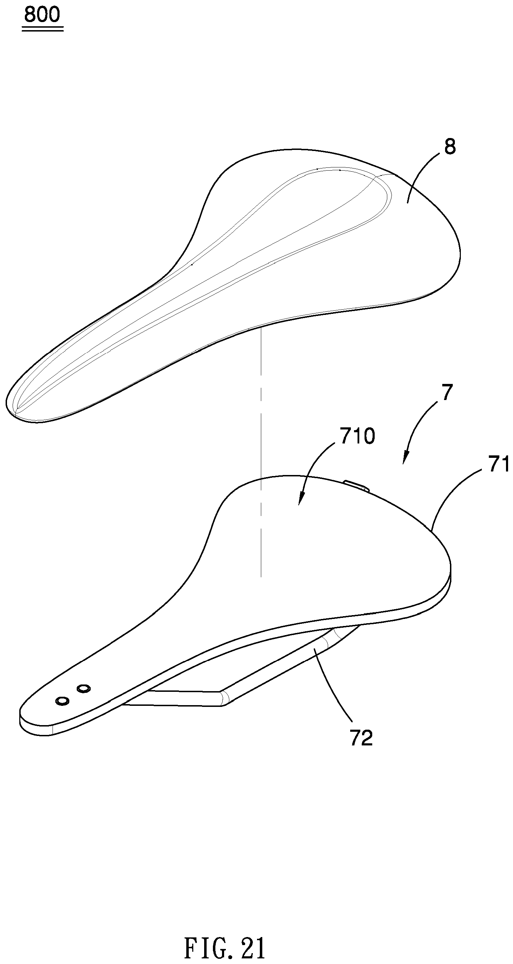

FIG. 21 is an exploded view of the foam product shown in FIG. 19;

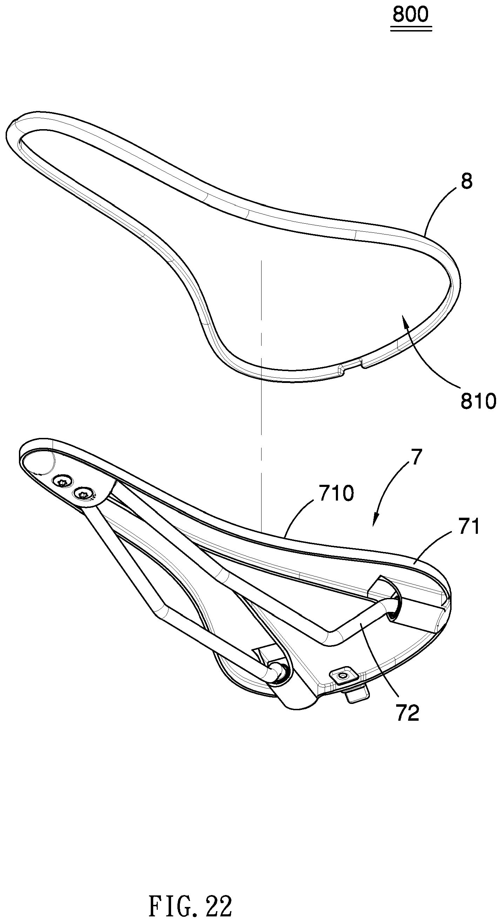

FIG. 22 is an exploded view of the foam product shown in FIG. 20;

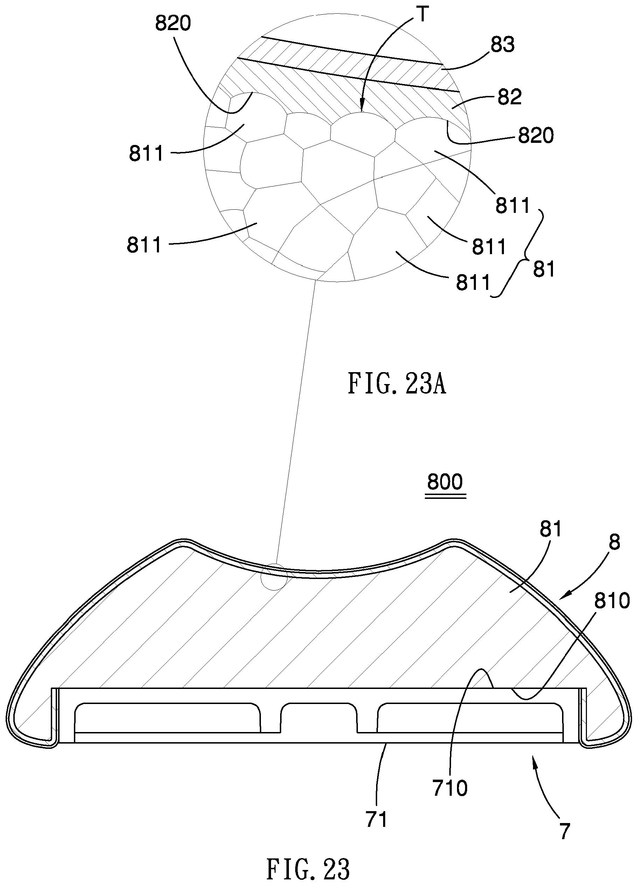

FIG. 23 is a cross-sectional view of the foam product shown in FIG. 19 taken along the line XXIII-XXIII;
FIG. 23A is a partial enlarged view of the foam product shown in FIG.23.

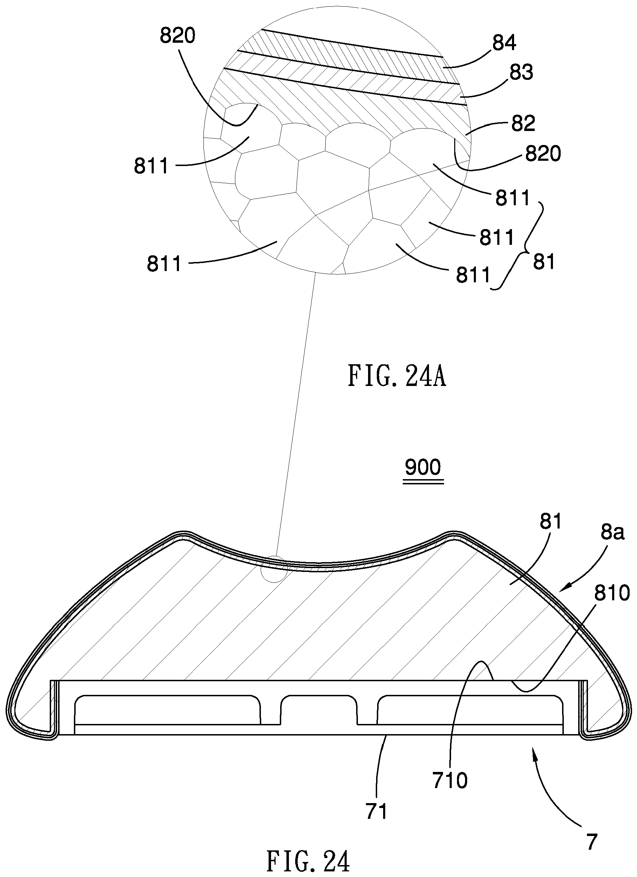

FIG. 24 is a cross-sectional view of a foam product in accordance with a ninth example, wherein Fig. 24 is not covered by claim 1; and
FIG. 24A is a partial enlarged view of the foam product shown in FIG. 24.

### DETAILED DESCRIPTION OF EMBODIMENTS

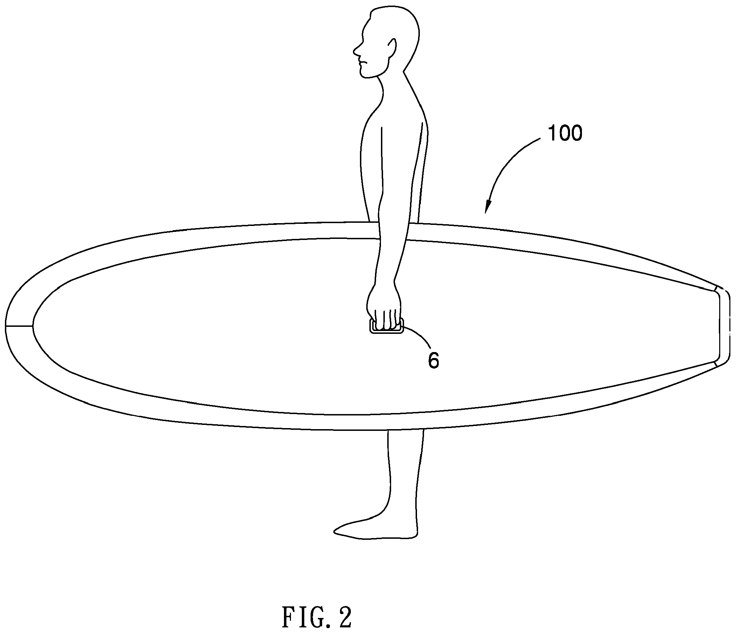

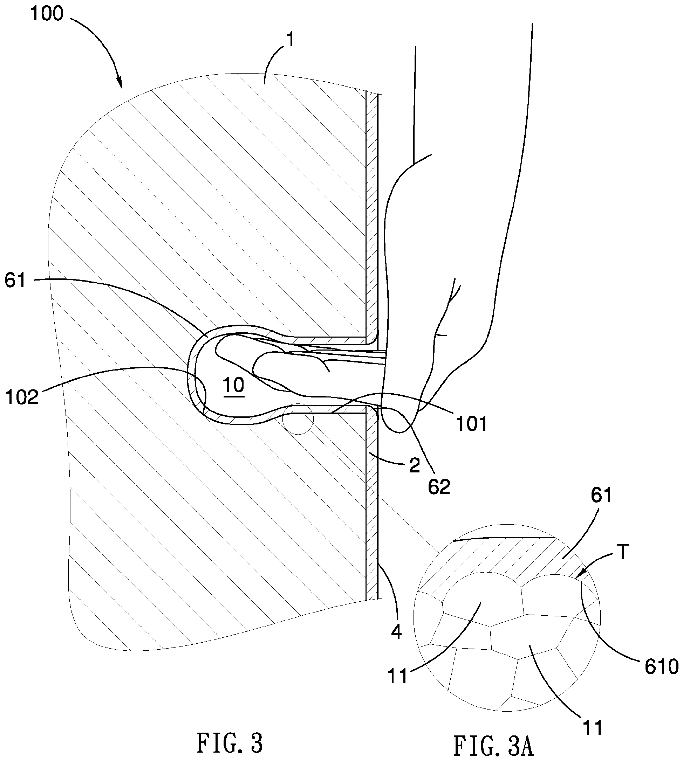

Referring to FIGS. 1-6, there is shown a first example of the foam product 100. The foam product 100 is a standup paddle board with a grip handle structure 6. A user can easily hold the foam product 100 using the grip handle structure 6 under the arm for transporting the foam product 100 in a comfortable and secure manner, as depicted in FIGS. 2 and 3.

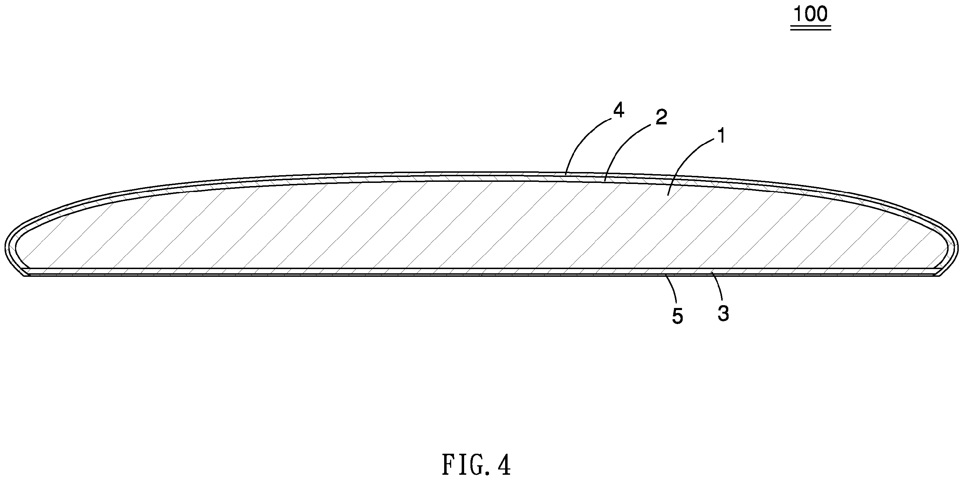

As shown in FIG. 4, the foam product 100 further includes a foam core 1, an upper foam skin 2 and a lower foam skin 3. In this example, the upper foam skin 2 is shaped like a half-shell and has a bottom surface glued to a top surface as well as side surfaces of the foam core 1. The lower foam skin 3 has a top surface glued to a bottom surface of the foam core 1. The foam core 1 is made of expanded polystyrene (EPS). The upper foam skin 2 and the lower foam skin 3 are both made of a relative softer material, such as expanded polyethylene (EPE) and each has a thickness of about 4 mm to 5 mm. The foam product 100 further includes a non-foam plastic film 4 and a non-foam plastic plate 5 for protection. The non-foam plastic film 4 has a bottom surface directly heat-laminated to the top surface of the upper foam skin 2. The non-foam plastic film 4 may be colored or printed with a pattern visible from the outside of the film 4. On the other hand, the non-foam plastic plate 5 is directly heat-laminated to the bottom surface of the lower foam skin 3. And, the non-foam plastic plate 5 is made of a wear-resistant material, such as polyethylene (PE), with a thickness of about 0.3 mm to 1.5 mm. Referring back to FIG. 3, the grip handle structure 6 includes a soft shell 61 and an opening 62 extending through the upper foam skin 2 and the non-foam plastic film 4. The soft shell 61 is preferably made of an irradiated cross-linked polyethylene foam, with a thickness of about 2 mm to 3 mm.

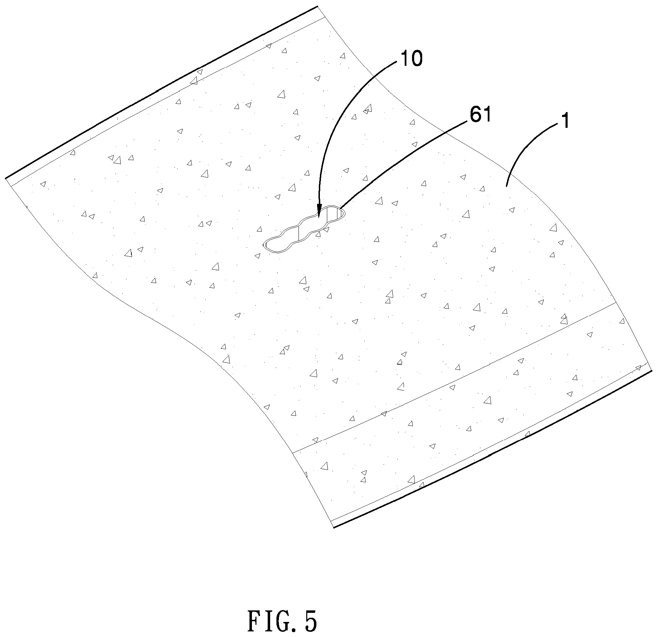

FIG. 5 illustrates the foam core 1 with a recess 10 in which the soft shell 61 is disposed. As shown in FIGS. 6 and 6A, the foam core 1 includes a tightly packed cluster of expanded beads 11. Each of the expanded beads 11 is made of a pre-expanded polystyrene bead. The foam core 1 defines the recess 10 in its top surface. The recess 10 has an upper space 101 and a lower, enlarged space 102. The soft shell 61 is suited in the recess 10 of the foam core 1 and has an upper space (not numbered) configured in size to receive four fingers of a human hand, and a lower, enlarged space (not numbered) to permit bending of the fingers, as shown in FIG. 3, as well.

It is noted that, some outermost beads 11 of the expanded beads 11 are exposed and bulging outward from the inner wall of the recess 10 of the foam core 1 with different heights to form a bubbly texture T. The soft shell 61 has its outer wall bonded to the inner wall of the recess 10 of the foam core 1. More specifically, as shown in FIGS. 3A and 6A, the soft shell 61 has a plurality of concave cavities 610 at its outer wall. Each of the concave cavities 610 of the soft shell 61 matedly surrounds a respective one of the bulging, outermost beads 11 in the recess 10 of the foam core 1. In contrast, the inner wall of the soft shell 61 is relatively more flat than the outer wall of the soft shell 61. In other words, the concave cavities 610 are defined only in the outer wall of the soft shell 61, not the inner wall of the soft shell 61. The soft shell 61 and the foam core 1 are firmly bonded together due to the inter-engaged convex and concave surfaces between the soft shell 61 and the foam core 1. Besides, it should be noted that the soft shell 61 and the foam core 1 may be directly heat bonded to each other with similar materials. Alternatively, an adhesive may be employed in between the soft shell 61 and the foam core 1 to further enhance the bonding between the two.

Referring to FIGS. 7-11, there is shown a second example of the foam product 200. The foam product 200 of the second example is generally identical to the foam product 100 of the first example in appearance, and has a grip handle structure 6 for being grasped. However, the foam product 200 is slightly different from the foam product 100 in the interior structure. For example, the foam core 1 of the foam product 100 is made of a single foam body with the same material;
however, the foam product 200 is a combination of two foam bodies with different materials and densities.

FIG. 8 illustrates a perspective view of the foam core 1 and the soft shell 61 of the foam product 200. As shown, the foam core 1 includes a first foam body la and a second foam body 1b embedded in the first foam body la. Specifically, the second foam body 1b is more rigid than the first foam body la. The recess 10 is defined in the second foam body 1b of the foam core 1. The first foam body 1a is made of expanded polystyrene, and the second foam body 1b is made of a copolymer of expanded polystyrene and expanded polyethylene. As best seen in FIG. 9, the recess 10 has an upper space 101 and a lower, enlarged space 102. The soft shell 61 is suited in the recess 10 of the second foam body 1b of the foam core 1, and has an upper space (not numbered) configured in size to receive four fingers of a human hand, and a lower, enlarged space (not numbered) to permit bending of the fingers, as shown in FIG. 9.

As shown in FIG. 10, the foam product 200 further includes an upper foam skin 2 and a lower foam skin 3. The upper foam skin 2 is shaped like a half-shell and has a bottom surface glued to a top surface as well as side surfaces of the foam core 1. The lower foam skin 3 has a top surface glued to a bottom surface of the foam core 1. The upper foam skin 2 and the lower foam skin 3 are both made of a relative softer material, such as expanded polyethylene (EPE) and each has a thickness of about 4 mm to 5 mm. The foam product 200 further includes a non-foam plastic film 4 and a non-foam plastic plate 5 for protection. The non-foam plastic film 4 has a bottom surface directly heat-laminated to the top surface of the upper foam skin 2. And, the non-foam plastic film 4 may be colored or printed with a pattern visible from the outside of the film 4. The non-foam plastic plate 5 is directly heat-laminated to the bottom surface of the lower foam skin 3. And, the non-foam plastic plate 5 is made of a wear-resistant material, such as polyethylene (PE), with a thickness of about 0.3 mm to 1.5 mm. As shown in FIG. 11, the grip handle structure 6 includes a soft shell 61 and an opening 62 extending through the upper foam skin 2 and the non-foam plastic film 4. The soft shell 61 is preferably made of an irradiated cross-linked polyethylene foam, with a thickness of about 2 mm to 3 mm.

Referring back to FIGS. 9 and 9A, the second foam body 1b of the foam core 1 includes a tightly packed cluster of expanded beads 11. Each of the expanded beads 11 is made of a pre-expanded bead. Similarly, the first foam body 1a of the foam core 1 is made of a tightly packed cluster of expanded beads 11, not shown, but with a different material. As shown in FIGS. 11 and 11A, some outermost beads 11 of the expanded beads 11 are exposed and bulging outward from the inner wall of the recess 10 of the second foam body 1b with different heights to form a bubbly texture T. The soft shell 61 has its outer wall attached to the inner wall of the recess 10 of the foam core 1. More specifically, the soft shell 61 has a plurality of concave cavities 610 at its outer wall. Each of the concave cavities 610 of the soft shell 61 matedly surrounds a respective one of the bulging, outermost beads 11 in the recess 10 of the second foam body 1b. In contrast, the inner wall of the soft shell 61 is relatively more flat than the outer wall of the soft shell 61. In this manner, the soft shell 61 and the second foam body 1b are firmly bonded together due to the inter-engaged convex and concave surfaces between the soft shell 61 and the second foam body 1b. It should be noted that the soft shell 61 and the second foam body 1b may be directly heat bonded to each other with similar materials. Alternatively, an adhesive may further be employed to further enhance the bonding of the soft shell 61 and the second foam body 1b.

Referring to FIGS. 12-13, there is shown a third example of the foam product 300 according to the invention. The foam product 300 of the third example is generally identical to the foam product 200 of the second example in appearance and in structure. For example, the foam core 1 of the foam product 300 also includes a first foam body la and a second foam body 1b. However, the foam core 1 and the upper foam skin 2 of the foam product 300 are bonded in a different manner.

As shown in FIGS. 12 and 12A, some outermost beads 11 of the expanded beads are exposed and bulging outward from the top surface of the first foam body 1a of the foam core 1 with different heights to form a bubbly texture T. Referring to FIG. 13, the upper foam skin 2 has at its bottom surface a plurality of concave cavities 20 each matedly surrounding a respective one of the bulging, outermost beads 11 on the top surface of the first foam body 1a, except that a small area of the bottom surface of the upper foam skin 2 is adhered to the top surface of the second foam body 1b. In other words, the upper foam skin 2 is partly bonded to the second foam body 1b via adhesives, and is mostly bonded to the first foam body 1a via the inter-engaged convex and concave surfaces, as shown in FIG. 13A. Likewise, the soft shell 61 is bonded to the second foam body 1b via the inter-engaged convex and concave surfaces, as shown in FIG. 13B.

Referring to FIGS. 14, 14A and 14B, there is shown a fourth example of the foam product 400. The foam product 400 of the fourth example is generally identical to the foam product 300 of the third example. For example, the foam core 1 of the foam product 400 includes a first foam body 1a and a second foam body (not shown); and the upper foam skin 2 is bonded to the first foam body la via the inter-engaged convex and concave surfaces, as shown in FIG. 14B. However, unlike the third example, the foam core 1 and the lower foam skin 3 of the foam product 400 of this fourth example are bonded in a different manner, as shown in FIG. 14A.

In FIG. 14A, some outermost beads 11 of the expanded beads are exposed and bulging outward from the bottom surface of the first foam body 1a of the foam core 1 with different heights to form a bubbly texture T. The lower foam skin 3 has at its top surface a plurality of concave cavities 30 each matedly surrounding a respective one of the bulging, outermost beads 11 on the bottom surface of the first foam body la. As such, the lower foam skin 3 is firmly bonded to the first foam body la via the inter-engaged convex and concave surfaces as well.

Referring to FIGS. 15, 15A and 15B, there is shown a fifth example of the foam product 500. The foam product 500 of the fifth example is generally identical to the foam product 400 of the fourth example, except that a non-foam plastic film 35 is interposed in between the lower foam skin 3 and the non-foam plastic plate 5.

In practice, the expanded beads of the foam core 1 may be made of expanded polypropylene or expanded polystyrene. The upper foam skin 2 may be made of expanded polyethylene. The upper non-foam plastic film 4 may be made of ethylene. Furthermore, the upper foam skin 2 has a thickness smaller than that of the foam core 1, but greater than that of the upper non-foam plastic film 4.

It is noted that, the foam product 500 has a base structure which includes the lower foam skin or layer 3 bonded to the bottom, inner surface of the foam core 1, the non-foam plastic plate 5 joined to the bottom surface of the foam layer 3, the non-foam plastic film 35 interposed in between the foam layer 3 and the non-foam plastic plate 5, and a pattern (not shown) printed on the non-foam plastic film 35 and visible through the non-foam plastic plate 5. Preferably, the non-foam plastic film 35 and the non-foam plastic plate 5 may both be made of ethylene.

Referring to FIG. 16, there is shown a sixth example of the foam product 600. The foam product 600 of the sixth example is generally identical to the foam product 300 of the third example. For example, the foam core 1 of the foam product 600 includes a first foam body 1a and a second foam body 1b; and the upper foam skin 1 is bonded to the first foam body 1a via the inter-engaged convex and concave surfaces. However, the soft shell 61 of the foam product 600 is slightly different from that of the foam product 300.

As shown in FIG. 16, the soft shell 61 includes a shell body 611 and a pair of extensions 612 extending from opposite sides of the shell body 611. Each of the extensions 612 has two sheets (not numbered) attached to each other. The recess 10 of the second foam body 1b of the foam core 1 is sized and shaped to receive the whole soft shell 61, namely both the shell body 611 and the extensions 612.

Referring to FIGS. 17 and 18, there is shown a seventh example of the foam product 700 according to the invention. The foam product 700 of the seventh example is generally identical to the foam product 300 of the third example. For example, the foam core 1 of the foam product 700 includes a first foam body 1a and a second foam body 1b; and the upper foam skin 1 is bonded to the first foam body la via the inter-engaged convex and concave surfaces. However, the soft shell 61 of the foam product 700 is slightly different from that of the foam product 300.

As shown in FIG. 17 or 18, the soft shell 61 includes a shell body 611 and a flange 613 extending from a top edge of the shell body 611. The recess 10 of the second foam body 1b of the foam core 1 is sized and shaped to receive the whole soft shell 61, namely both the shell body 611 and the flange 613.

As described above, the present invention provides a foam product in which the soft shell and/or the foam skin may be firmly bonded to the foam core using the characteristic of the expanded beads of the foam core. The foam product may be one of a stand up paddle board, sit on top kayak, small sail boat, a windsurf board, a snow board, a skiing board, and other craft boards that are too wide to be carried under the arm. It is noted that the foam product is not limited to be shaped like a board or plate. Instead, the foam product would be non-flattened with a different shape.

Referring to FIGS. 19 to 23, there is shown an (eighth) example of the foam product 800. The foam product 800 of the (eighth) example is directed to a bicycle saddle having a foam structure similar to that of the aforementioned examples.

As shown in FIG. 19, the foam product 800 in form of a bicycle saddle includes a base structure 7, and a saddle cushion 8 mounted on the base structure 7. As shown in FIG. 20, the base structure 7 generally includes a saddle shell 71 and a support rail 72 mounted underneath the saddle shell 71, as known in the art. As shown in FIGS. 21 and 22, the saddle shell 71 has a flat top surface 710 bonded to a flat bottom surface 810 of the saddle cushion 8 with adhesives, for example. Preferably, the saddle shell 71 is made of a fiber-reinforced plastic.

As best seen in FIG. 23, the saddle cushion 8 of the bicycle saddle 800 generally includes a foam core 81, a foam skin 82 and a non-foam plastic film 83. The foam core 81 has its flat bottom surface 810 bonded to the flat top surface 710 of the saddle shell 71 of the base structure 7 with adhesives. The foam skin 82 has an inner surface attached to the outer surface of the foam core 81, and the non-foam plastic film 83 is disposed on an outer surface of the foam skin 82. A pattern (not shown) may be printed on an inner surface of the non-foam plastic film 83 and sandwiched in between the foam skin 82 and the non-foam plastic film 83. Moreover, the foam skin 82 has a thickness smaller than that of the foam core 81, but greater than that of the non-foam plastic film 83. It is understood that, the foam core 81 serves as a padding of the bicycle saddle 800, and the foam skin 82 along with the non-foam plastic film 83 serves as an overlying layer covering the padding.

As depicted in FIG. 23A, the foam core 81 of the saddle cushion 8 includes a tightly packed cluster of expanded beads 811. Each of the expanded beads 811 may be made of a pre-expanded polypropylene bead, a pre-expanded polystyrene bead, a pre-expanded polyethylene bead or a pre-expanded polystyrene-polyethylene composite bead. The foam core 81 of the expanded beads has an outer surface on which some outermost beads of the expanded beads 811 are exposed and bulging outward with different heights to form a bubbly texture T. On the other hand, the foam skin 82 has an inner surface attached to the outer surface of the foam core 81, and has at its inner surface a plurality of concave cavities 820 each matedly surrounding a respective one of the bulging, outermost beads 811 on the outer surface of the foam core 8. The foam skin 82 and the foam core 81 are firmly bonded together due to the inter-engaged convex and concave surfaces therebetween. Besides, it should be noted that the foam skin 82 and the foam core 81 may be directly heat bonded to each other with similar materials. Alternatively, an adhesive may be employed in between the foam skin 82 and the foam core 81 to further enhance the bonding between the two. In contrast, the outer surface of the foam skin 82 is relatively more flat than the inner surface of the foam skin 82 and is bonded with the non-foam plastic film 83.

As described above, the expanded beads of the foam core 81 may comprise a material of expanded polyolefin, expanded polystyrene or copolymers. The foam skin 82 may comprise a material of expanded polyethylene or expanded polypropylene with a thickness of about 2 mm. The non-foam plastic film 83 may be made of a wear-resistant material, such as polyethylene (PE) or a Surlyn^{®} resin, with a thickness of about 0.03 to 0.3 mm. As is known in the art, the Surlyn^{®} resin is a copolymer of ethylene and methacrylic acid manufactured by DuPont, and generally has better wear resistance than the polyethylene.

Referring to FIGS. 24 and 24A, there is shown a (ninth) example of the foam product 900 . The foam product 900 of the (ninth) example is generally identical to the foam product 800 of the (eighth) example, except that the saddle cushion 8a is slightly different from the saddle cushion 8 shown in FIG. 23. That is to say, a second, non-foam plastic film 84 is further employed on an outer surface of the first non-foam plastic film 83. And, the second non-foam plastic film 84 is more wear-resistant than the first non-foam plastic film 83. In this example, the first non-foam plastic film 83 is made of ethylene, and the second non-foam plastic film 84 is made of the Surlyn^{®} resin with a thickness of about 0.6 mm.

## Claims

1. A foam product (100), that is a standup paddle board with a grip handle structure (6), comprising:
a foam core (1) including a tightly packed cluster of expanded beads (11), the foam core (1) having a top surface on which some outermost beads (11) of the expanded beads (11) are exposed and bulging outward to form a bubbly texture (T); and
a upper foam skin (2) having a bottom surface bonded to the top surface of the foam core (1), and the bottom surface of the foam skin (2) having a plurality of cavities (20) sized and shaped to respectively receive the bulging, outermost beads (11) on the top surface of the foam core (1),
a non-foam plastic film (4) having a bottom surface directly heat-laminated to the top surface of the upper foam skin (2),
wherein the grip handle structure (6) includes a soft shell (61) and an opening (62) extending through the upper foam skin (2) and the non-foam plastic film (4),
wherein the foam core (1) includes a first foam body (1a) and a second foam body (1b) embedded in the first foam body (la), with the second foam body (1b) being more rigid than the first foam body (1a), wherein a recess (10) is defined in the second foam body (1b) of the foam core (1), wherein the recess (10) has an upper space (101) and a lower, enlarged space (102), wherein the soft shell (61) is suited in the recess (10) of the second foam body (1b) of the foam core (1), the soft shell (61) having its outer wall attached to the inner wall of the recess (10), the soft shell (61) has an upper space configured in size to receive four fingers of a human hand, and a lower, enlarged space to permit bending of the fingers,
wherein the second foam body (1b) of the foam core (1) includes a tightly packed cluster of expanded beads (11), with each of the expanded beads (11) being made of a pre-expanded bead, and wherein the first foam body (1a) of the foam core (1) is made of a tightly packed cluster of expanded beads (11), but with a different material, wherein some outermost beads (11) of the expanded beads (11) are exposed and bulging outward from the inner wall of the recess (10) of the second foam body (1b) with different heights to form a bubbly texture T,
wherein the upper foam skin (2) is partly bonded to the second foam body (1b) via adhesives, and is mostly bonded to the first foam body (1a) via the inter-engaged convex and concave surfaces.

2. The foam product (100) as recited in claim 1, wherein the protruded, outermost beads (11) on the top surface of the foam core (1) are protruded with different heights.

3. The foam product (100) as recited in claim 1, further comprising a lower foam skin (3) with a top surface bonded to a bottom surface of the foam core (1), wherein some outermost beads (11) of the expanded beads (11) are exposed and protruded on the bottom surface of the foam core (1), and the lower foam skin (3) has at its top surface a plurality of cavities (30) sized and shaped to respectively receive the protruded, outermost beads (11) on the bottom surface of the foam core (1).

4. The foam product (100) as recited in claim 3, further comprising a non-foam plastic plate (5) with a top surface bonded to a bottom surface of the lower foam skin (3).

5. The foam product (100) as recited in claim 1, wherein the first foam body (1a) of the foam core (1) is made of expanded polystyrene, and the second foam body (1b) of the foam core (1) is made of a copolymer of expanded polystyrene and expanded polyethylene.

6. The foam product (100) as recited in claim 1, wherein the soft shell (61) is made of an irradiated cross-linked polyethylene foam.

7. The foam product (100) as recited in claim 6, wherein the cross-linked polyethylene foam of the soft shell (61) is an irradiated cross-linked polyethylene foam.

8. The foam product (100) as recited in claim 1, wherein the soft shell (61) has a thickness of 2 mm to 3 mm.

9. The foam product (100) as recited in claim 1, wherein the soft shell (61) includes a shell body (611) and a pair of extensions (612) extending from opposite sides of the shell body (611), each of the extensions (612) has two sheets attached to each other, and the recess (10) of the foam core (1) is sized and shaped to receive the soft shell (61).

10. The foam product (100) as recited in claim 1, wherein the soft shell (61) includes a shell body (611) and a flange (613) extending from a top edge of the shell body (611), and the recess (10) of the second foam body (1b) of the foam core (1) is sized and shaped to receive the soft shell (61).

## Patentansprüche

1. Schaumstoffprodukt (100), welches ein Stehpaddelbrett mit einer Handgriffstruktur (6) ist, aufweisend:
einen Schaumstoffkern (1), welcher ein dicht-gepacktes Kluster von expandierten Kugeln (11) aufweist, wobei der Schaumstoffkern (1) eine obere Fläche hat, an welcher einige äußerste Kugeln (11) von den expandierten Kugeln (11) exponiert sind und sich nach außen hin wölben, um eine Blasentextur (T) zu bilden, und
eine obere Schaumstoffhaut (2), welche eine untere Fläche hat, welche mit der oberen Fläche des Schaumstoffkerns (1) verbunden ist, und wobei die untere Fläche der Schaumstoffhaut (2) eine Vielzahl von Hohlräumen (20) hat, welche dimensioniert und geformt sind, um in jeweils zugeordneter Weise die gewölbten äußersten Kugeln (11) an der oberen Fläche des Schaumstoffkerns (1) aufzunehmen,
eine Nicht-Schaumstoff-Kunststoff-Folie (4), welche eine untere Fläche hat, welche direkt an die obere Fläche der oberen Schaumstoffhaut (2) heißlaminiert ist,
wobei die Handgriffstruktur (6) eine Weichschale (61) und eine Öffnung (62) aufweist, welche sich durch die obere Schaumstoffhaut (2) und die Nicht-Schaumstoff-Kunststoff-Folie (4) hindurch erstreckt,
wobei der Schaumstoffkern (1) einen ersten Schaumstoffkörper (1a) und einen zweiten Schaumstoffkörper (1b) aufweist, welcher in dem ersten Schaumstoffkörper (1a) eingebettet ist, wobei der zweite Schaumstoffkörper (1b) steifer als der erste Schaumstoffkörper (1a) ist, wobei eine Ausnehmung (10) in dem zweiten Schaumstoffkörper (1b) des Schaumstoffkerns (1) definiert ist, wobei die Ausnehmung (10) einen oberen Raum (101) und einen unteren vergrößerten Raum (102) hat, wobei die Weichschale (61) in die Ausnehmung (10) des zweiten Schaumstoffkörpers (1b) des Schaumstoffkerns (1) eingepasst ist, wobei die Weichschale (61) ihrer Außenwand an der Innenwand der Ausnehmung (10) befestigt hat, wobei die Weichschale (61) einen oberen Raum, welcher in seiner Größe konfiguriert ist, um vier Finger einer menschlichen Hand aufzunehmen, und einen unteren vergrößerten Raum hat, um das Biegen der Finger zu ermöglichen,
wobei der zweite Schaumstoffkörper (1b) des Schaumstoffkerns (1) ein dicht-gepacktes Kluster von expandierten Kugeln (11) aufweist, wobei jede von den expandierten Kugeln (11) aus einer vorgeschäumten Kugel hergestellt ist, und wobei der erste Schaumstoffkörper (1a) des Schaumstoffkerns (1) aus einem dicht-gepackten Kluster von expandierten Kugeln (11) hergestellt ist, allerdings aus einem anderen Material, wobei einige äußerste Kugeln (11) von den expandierten Kugeln (11) exponiert sind und sich von der Innenwand der Ausnehmung (10) des zweiten Schaumstoffkörpers (1b) aus mit unterschiedlichen Höhen nach außen hin wölben, um eine Blasentextur (T) zu bilden,
wobei die obere Schaumstoffhaut (2) teilweise mit dem zweiten Schaumstoffkörper (1b) über Klebstoffe und größtenteils über die ineinandergreifenden konvexen und konkaven Flächen mit dem ersten Schaumstoffkörper (1a) verbunden ist.

2. Schaumstoffprodukt (100) gemäß Anspruch 1, wobei die vorstehenden äußersten Kugeln (11) an der oberen Fläche des Schaumstoffkerns (1) mit unterschiedlichen Höhen hervorstehen.

3. Schaumstoffprodukt (100) gemäß Anspruch 1, ferner aufweisend:
eine untere Schaumstoffhaut (3) mit einer oberen Fläche, welche mit einer unteren Fläche des Schaumstoffkerns (1) verbunden ist, wobei einige äußerste Kugeln (11) von den expandierten Kugeln (11) exponiert sind und an der unteren Fläche des Schaumstoffkerns (1) hervorstehen, und wobei die untere Schaumstoffhaut (3) an ihrer oberen Fläche eine Vielzahl von Hohlräumen (30) hat, welche dimensioniert und geformt sind, um in jeweils zugeordneter Weise die an der unteren Fläche des Schaumstoffkerns (1) hervorstehenden äußersten Kugeln (11) aufzunehmen.

4. Schaumstoffprodukt (100) gemäß Anspruch 3, ferner aufweisend: eine Nicht-Schaumstoff-Kunststoff-Platte (5) mit einer oberen Fläche, welche mit einer unteren Fläche der unteren Schaumstoffhaut (3) verbunden ist.

5. Schaumstoffprodukt (100) gemäß Anspruch 1, wobei der erste Schaumstoffkörper (1a) des Schaumstoffkerns (1) aus expandiertem Polystyrol hergestellt ist und der zweite Schaumstoffkörper (1b) des Schaumstoffkerns (1) aus einem Copolymer von expandiertem Polystyrol und expandiertem Polyethylen hergestellt ist.

6. Schaumstoffprodukt (100) gemäß Anspruch 1, wobei die Weichschale (61) aus einem Strahlungsvernetztes-Polyethylen-Schaum hergestellt ist.

7. Schaumstoffprodukt (100) gemäß Anspruch 6, wobei der Vernetztes-Polyethylen-Schaum der Weichschale (61) ein Strahlungsvernetztes-Polyethylen-Schaum ist.

8. Schaumstoffprodukt (100) gemäß Anspruch 1, wobei die Weichschale (61) eine Dicke von 2 mm bis 3 mm hat.

9. Schaumstoffprodukt (100) gemäß Anspruch 1, wobei die Weichschale (61) einen Schalenkörper (611) und ein Paar von Verlängerungen (612) aufweist, welche sich von entgegengesetzten Seiten des Schalenkörpers (611) aus erstrecken, wobei jede von den Verlängerungen (612) zwei aneinander befestigte Lagen aufweist, und wobei die Ausnehmung (10) des Schaumstoffkerns (1) dimensioniert und geformt ist, um die Weichschale (61) aufzunehmen.

10. Schaumstoffprodukt (100) gemäß Anspruch 1, wobei die Weichschale (61) einen Schalenkörper (611) und einen Flansch (613) aufweist, welcher sich von einem oberen Rand des Schalenkörpers (611) aus erstreckt, und wobei die Ausnehmung (10) des zweiten Schaumstoffkörpers (1b) des Schaumstoffkerns (1) dimensioniert und geformt ist, um die Weichschale (61) aufzunehmen.

## Revendications

1. Produit en mousse (100) qui est une planche de standup paddle avec une structure de poignée de préhension (6), comprenant :
un noyau en mousse (1) comprenant un groupe serré de perles expansées (11), le noyau en mousse (1) ayant une surface supérieure sur laquelle certaines perles les plus extérieures (11) des perles expansées (11) sont exposées et bombées vers l'extérieur pour former une texture bouillonnante (T) ; et
une peau en mousse supérieure (2) ayant une surface inférieure liée à la surface supérieure du noyau en mousse (1), et la surface inférieure de la peau en mousse (2) ayant une pluralité de cavités (20) dimensionnées et formées pour recevoir respectivement les perles les plus extérieures bombées (11) sur la surface supérieure du noyau en mousse (1) ,
un film plastique non-mousse (4) dont une surface inférieure est directement laminée à chaud sur la surface supérieure de la peau en mousse supérieure (2),
dans lequel la structure de poignée de préhension (6) comprend une coque souple (61) et une ouverture (62) s'étendant à travers la peau en mousse supérieure (2) et le film plastique non-mousse (4),
dans lequel le noyau en mousse (1) comprend un premier corps en mousse (1a) et un deuxième corps en mousse (1b) intégré dans le premier corps en mousse (la), le deuxième corps en mousse (1b) étant plus rigide que le premier corps en mousse (la), un évidement (10) étant défini dans le deuxième corps en mousse (1b) du noyau en mousse (1), l'évidement (10) ayant un espace supérieur (101) et un espace inférieur élargi (102), la coque souple (61) étant adaptée dans l'évidement (10) du deuxième corps en mousse (1b) du noyau en mousse (1), la coque souple (61) ayant sa paroi extérieure fixée à la paroi intérieure de l'évidement (10), la coque souple (61) ayant un espace supérieur configuré en taille pour recevoir quatre doigts d'une main humaine, et un espace inférieur élargi pour permettre le pliage des doigts,
dans lequel le deuxième corps en mousse (1b) du noyau en mousse (1) comprend un groupe serré de perles expansées (11), chacune des perles expansées (11) étant constituée d'une perle pré-expansée, et dans lequel le premier corps en mousse (1a) du noyau en mousse (1) est constitué d'un groupe serré de perles expansées (11), mais avec un matériau différent, dans lequel certaines perles les plus extérieures (11) des perles expansées (11) sont exposées et bombées vers l'extérieur depuis la paroi intérieure de l'évidement (10) du deuxième corps en mousse (1b) avec différentes hauteurs pour former une texture bouillonnante T,
dans lequel la peau en mousse supérieure (2) est partiellement liée au deuxième corps en mousse (1b) par des adhésifs, et est principalement liée au premier corps en mousse (1a) par les surfaces convexes et concaves en prise mutuelle.

2. Produit en mousse (100) selon la revendication 1, dans lequel les perles (11) les plus extérieures en saillie sur la surface supérieure du noyau en mousse (1) sont en saillie avec des hauteurs différentes.

3. Produit en mousse (100) selon la revendication 1, comprenant en outre une peau en mousse inférieure (3) avec une surface supérieure liée à une surface inférieure du noyau en mousse (1), dans lequel certaines perles les plus extérieures (11) des perles expansées (11) sont exposées et font saillie sur la surface inférieure du noyau en mousse (1), et la peau en mousse inférieure (3) présente à sa surface supérieure une pluralité de cavités (30) dimensionnées et formées pour recevoir respectivement les perles les plus extérieures en saillie (11) sur la surface inférieure du noyau en mousse (1).

4. Produit en mousse (100) selon la revendication 3, comprenant en outre une plaque en plastique non-mousse (5) avec une surface supérieure liée à une surface inférieure de la peau en mousse inférieure (3).

5. Produit en mousse (100) selon la revendication 1, dans lequel le premier corps en mousse (1a) du noyau en mousse (1) est constitué de polystyrène expansé, et le deuxième corps en mousse (1b) du noyau en mousse (1) est constitué d'un copolymère de polystyrène expansé et de polyéthylène expansé.

6. Produit en mousse (100) selon la revendication 1, dans lequel la coque souple (61) est constituée d'une mousse de polyéthylène réticulé irradié.

7. Produit en mousse (100) selon la revendication 6, dans lequel la mousse de polyéthylène réticulée de la coque souple (61) est une mousse de polyéthylène réticulé irradié.

8. Produit en mousse (100) selon la revendication 1, dans lequel la coque souple (61) a une épaisseur de 2 mm à 3 mm.

9. Produit en mousse (100) selon la revendication 1, dans lequel la coque souple (61) comprend un corps de coque (611) et une paire d'extensions (612) s'étendant depuis des côtés opposés du corps de coque (611), chacune des extensions (612) a deux feuilles attachées l'une à l'autre, et l'évidement (10) du noyau en mousse (1) est dimensionné et formé pour recevoir la coque souple (61).

10. Produit en mousse (100) selon la revendication 1, dans lequel la coque souple (61) comprend un corps de coque (611) et une bride (613) s'étendant à partir d'un bord supérieur du corps de coque (611), et l'évidement (10) du deuxième corps en mousse (1b) du noyau en mousse (1) est dimensionné et formé pour recevoir la coque souple (61).
